# EUROPEAN PATENT APPLICATION

(11) **EP 2 053 583 A1**
(43) Date of publication of application: **29.04.2009**
(21) Application number: 07767359.8
(22) Date of filing: 21.06.2007
(51) Int. Cl.: G09F 9/00, B60R 11/02, G02F 1/1345, G09F 9/30

(54) **DISPLAY DEVICE**

(30) Priority: 27.07.2006 JP 2006205210
(71) Applicant: Sharp Kabushiki Kaisha, Osaka-shi, Osaka 545-8522 (JP)
(72) Inventor: TANAKA, Shinya, Matsusaka-shi, Mie 515-0044 (JP); IMAI, Hajime, Matsusaka-shi, Mie 515-0011 (JP); TSUKAMURA, Chikanori, Tsu-shi, Mie 514-0103 (JP); KATAOKA, Yoshiharu, Tsu-shi, Mie 514-0822 (JP)
(74) Representative: Müller - Hoffmann & Partner
(86) International application number: PCT/JP2007/062533
(87) International publication number: WO 2008/013013

(57) **Abstract**

In a display device **(100)** according to the present invention, an insulative substrate **(210)** is curved. A substrate line **(250)** includes first input substrate lines **(252)** electrically connected to first driving elements **(260)** and first output substrate lines **(254)** electrically connected to first lines **(230)** and the first driving elements **(260).** The first output substrate lines **(254)** are provided so as to be closer to the displaying region than are the first input substrate lines **(252).** Each first driving element **(260)** has a rectangular shape with two longer sides **(261, 262)** and two shorter sides **(263, 264),** the first driving element **(260)** being mounted so that the longer sides **(261, 262)** are parallel to the direction in which the first lines **(230)** extend.

## Description

### TECHNICAL FIELD

The present invention relates to a display device, and more particularly to a display device having a curved shape.

### BACKGROUND ART

Generic display devices have substantially planar or rectangular solid shapes. However, in a display device having such a shape, external light in the surroundings may be reflected by an insulative substrate (e.g., a glass substrate), so that the surrounding landscapes may appear as reflection glares overlaid on a video on the display device, possibly causing a misperception of the video. Therefore, adopting a curved shape for the display device is known to suppress reflection glares. In a display device of a curved shape, the insulative substrate is curved in a predetermined shape (see, for example, Patent Document 1).
[Patent Document 1] Japanese Laid-Open Patent Publication No. 11-38395

### DISCLOSURE OF INVENTION

### PROBLEMS TO BE SOLVED BY THE INVENTION

Generally speaking, an active matrix substrate that is used for a display device such as a liquid crystal display device includes a plurality of driving elements (semiconductor chips) which are mounted in a terminal region of an insulative substrate. The driving elements generate data signals and gate signals based on input signals, and supply these signals to signal lines and scanning lines.

The inventors have found that, when driving elements are simply mounted on a curved insulative substrate, the driving elements may become detached from the insulative substrate due to a load which emanates from bending stress. On the other hand, if the manner of mounting the driving elements is changed in order to suppress detachment of the driving elements from the insulative substrate, the design of substrate lines which are electrically connected to the driving elements will become complicated, so that a broad region will be required for forming the substrate lines. Consequently, enlargement of the insulative substrate size may become necessary.

The present invention has been made in view of the above problems, and an objective thereof is to provide a display device in which detachment of driving elements from a curved insulative substrate is suppressed, and in which an increase in size of the insulative substrate is reduced.

### MEANS FOR SOLVING THE PROBLEMS

A display device according to the present invention is a display device comprising an active matrix substrate and a display medium layer disposed on a principal face of the active matrix substrate, wherein, the active matrix substrate includes: an insulative substrate having a principal face which includes a displaying region and a terminal region, a plurality of circuit elements provided in the displaying region of the insulative substrate, a plurality of first lines and a plurality of second lines connected to the plurality of circuit elements, a plurality of substrate lines provided in the terminal region of the insulative substrate, at least one first driving element mounted in the terminal region of the insulative substrate for supplying a signal to the plurality of first lines, and at least one second driving element mounted in the terminal region of the insulative substrate for supplying a signal to the plurality of second lines; the insulative substrate is curved; the plurality of substrate lines include a plurality of first input substrate lines which are electrically connected to the at least one first driving element and a plurality of first output substrate lines which are electrically connected to the plurality of first lines and the at least one first driving element, the first output substrate lines corresponding to the at least one first driving element being disposed so as to be closer to the displaying region than are the first input substrate lines; and when the at least one first driving element is viewed from a normal direction of the principal face of the insulative substrate, the at least one first driving element has a rectangular shape with two longer sides and two shorter sides, the at least one first driving element being mounted so that each longer side thereof is parallel to a direction in which the first lines extend.

In one embodiment, input bumps electrically connected to the first input substrate lines and output bumps electrically connected to the first output substrate lines are provided on the at least one first driving element.

In one embodiment, when the at least one second driving element is viewed from the normal direction of the principal face of the insulative substrate, the at least one second driving element has a rectangular shape with two longer sides and two shorter sides, the longer sides of the at least one second driving element being disposed parallel to the longer sides of the at least one first driving element.

In one embodiment, the insulative substrate is curved in a direction which is perpendicular to each longer side of the at least one first driving element.

In one embodiment, the principal face of the insulative substrate is curved in a concave shape.

In one embodiment, the principal face of the insulative substrate is curved in a convex shape.

In one embodiment, each first line is one of a signal line and a scanning line, and each second line is the other of a signal line and a scanning line.

In one embodiment, the insulative substrate is a glass substrate.

In one embodiment, the insulative substrate is a plastic substrate.

In one embodiment, the at least one first driving element and the at least one second driving element are each mounted via an anisotropic electrically-conductive layer.

In one embodiment, the display device further comprises a counter substrate opposing the active matrix substrate via the display medium layer, wherein, the display medium layer is a liquid crystal layer.

In one embodiment, the display device further comprises a circuit for receiving a television broadcast.

In an automotive vehicle according to the present invention, the aforementioned display device is used as an instrument panel.

### EFFECTS OF THE INVENTION

According to the present invention, there is provided a display device in which detachment of driving elements from a curved insulative substrate is suppressed, and in which an increase in size of the insulative substrate is reduced.

### BRIEF DESCRIPTION OF DRAWINGS

[FIG. **1****] (a)** is A schematic cross-sectional view of an embodiment of a display device according to the present invention, where: **(b)** is a schematic side view of the display device of the present embodiment; and **(c)** is a schematic plan view of the display device of the present embodiment.
[FIG. **2****]** A schematic diagram of signal line driving elements in the display device of the present embodiment.
[FIG. **3****]** A schematic plan view of a display device of a first comparative example.
[FIG. **4****]** A schematic plan view of a display device of a second comparative example.
[FIG. **5****]** A schematic diagram of a signal line driving element of the display device the second comparative example.
[FIG. **6****]** A diagram showing an example where the display device of Embodiment 2 is used for an instrument panel.
[FIG. **7****]** A schematic plan view showing a variant of the display device of the present embodiment.
[FIG. **8****]** A schematic plan view showing another variant of the display device of the present embodiment.
[FIG. **9****] (a)** is a schematic side view of a variant of the display device of the present embodiment, and **(b)** is a schematic plan view of the display device shown in **(a).**

### DESCRIPTION OF THE REFERENCE NUMERALS

- **100**: display device

- **200**: active matrix substrate
- **210**: first insulative substrate
- **211**: displaying region
- **212**: terminal region
- **213**: principal face
- **220**: circuit element
- **230**: first line
- **240**: second line
- **250**: substrate line
- **252**: first input substrate line
- **254**: first output substrate line
- **256**: second input substrate line
- **258**: second output substrate line
- **260**: first driving element
- **261, 262**: longer side of first driving element
- **263, 264**: shorter side first driving element
- **270**: second driving element
- **271, 272**: longer side of second driving element
- **273, 274**: shorter side of second driving element
- **280**: input substrate
- **281**: terminal
- **300**: counter substrate
- **310**: second insulative substrate
- **311**: principal face
- **350**: display medium layer

### BEST MODE FOR CARRYING OUT THE INVENTION

Hereinafter, an embodiment of a display device according to the present invention will be described with reference to the drawings. Herein, a liquid crystal display device will be illustrated as an example of a display device.

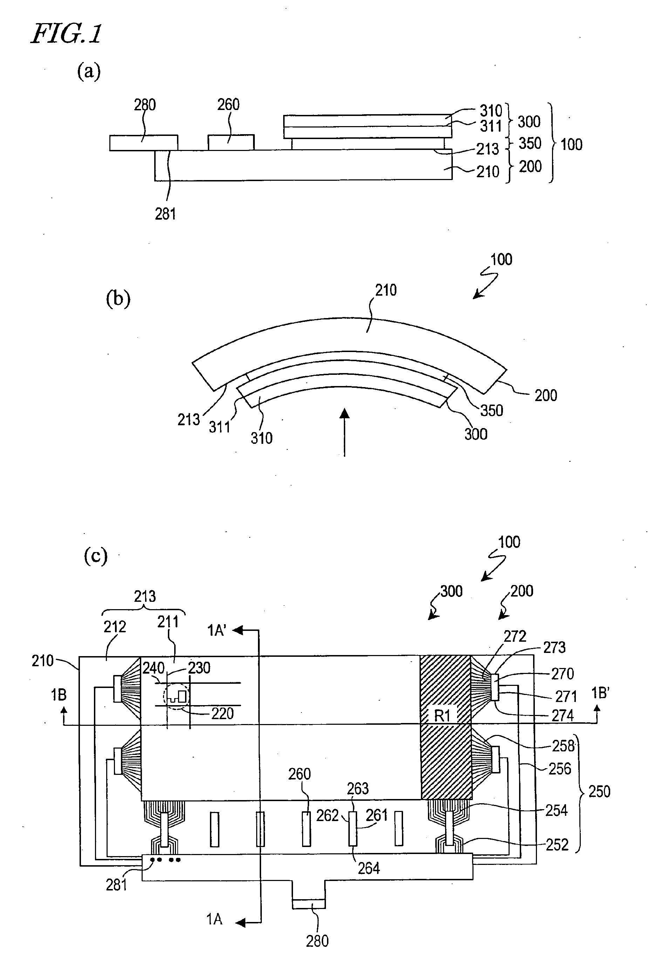

As shown in FIG. **1(a)****,** the display device **100** of the present embodiment includes an active matrix substrate **200,** a counter substrate **300,** and a display medium layer **350** interposed between the active matrix substrate **200** and the counter substrate **300.** As shown in FIG. **1(b)****,** the display device **100** of the present embodiment has a curved shape. Herein, the display device **100** is a liquid crystal display device, and the display medium layer **350** is a liquid crystal layer. In this case, an image is displayed when each pixel modulates the light which is emitted from a backlight (not shown).

FIG. **1(c)** shows a schematic construction when the display device **100** is viewed from the normal direction of the display surface. The active matrix substrate **200** includes: an insulative substrate **210** having a principal face **213** which includes a displaying region **211** and a terminal region **212;** a plurality of circuit elements **220** provided in the displaying region **211** of the insulative substrate **210;** a plurality of lines **230** and a plurality of lines **240** connected to the plurality of circuit elements **220;** a plurality of substrate lines **250** provided in the terminal region **212** of the insulative substrate **210;** a plurality of driving elements **260** for supplying signals to the plurality of lines **230;** and driving elements **270** for supplying signals to the plurality of lines **240.** The driving elements **260** and **270** are bare chips, for example, and are mounted in the terminal region **212** of the insulative substrate **210.** Moreover, an input substrate **280** is attached in the terminal region **212** of the insulative substrate **210.**

Note that, in the following descriptions of the present specification, the lines **230** and **240** will be referred to as first lines and second lines, respectively; the driving elements **260** will be referred to as first driving elements; and the driving elements **270** will be referred to as second driving elements. Herein, the first lines **230** are signal lines; the second lines **240** are scanning lines; the first driving elements **260** are signal line driving elements; and the second driving elements **270** are scanning line driving elements. Moreover, the signals which are supplied by the signal line driving elements **260** to the signal lines **230** are data signals, whereas the signals which are supplied by the scanning line driving elements **270** to the scanning lines **240** are gate signals.

FIG. **1(a)** corresponds to a cross section along line **1A-1A'** in FIG. **1(c)****.** As shown in FIG. **1(a)****,** the counter substrate **300** includes an insulative substrate **310.** The area of the principal face **213** of the insulative substrate **210** is greater than that of the principal face **311** of the insulative substrate **310,** and the insulative substrate **310** is disposed so as to overlap the insulative substrate **210.** Note that, in the following descriptions of the present specification, the insulative substrate **210** of the active matrix substrate **200** may be referred to as a "first insulative substrate", whereas the insulative substrate **310** of the counter substrate **300** may be referred to as a "second insulative substrate". Herein, the first and second insulative substrates **210** and **310** are glass substrates. For example, the first insulative substrate **210** has an outer size of 383.8 mm*122 mm; the second insulative substrate **310** has an outer size of 373.8 mm*116.5 mm; and the first and second insulative substrates **210** and **310** have a thickness of 0.25 mm.

FIG. **1(b)** corresponds to a cross section along line **1B-1B'** in FIG. **1(c)****.** The arrow shown in FIG. **1(b)** indicates a direction in which a viewer of the display device **100** watches the display surface. The first insulative substrate **210** and the second insulative substrate **310** are curved with respect to a bending axis which is parallel to the signal lines **230,** in a direction that the scanning lines **240** extend, i.e., the lateral direction. As shown in FIG. **1(b)****,** the principal face **213** of the first insulative substrate **210** is curved in a concave shape, whereas the principal face **311** of the second insulative substrate **310** is curved in a convex shape, such that the principal face **311** of the second insulative substrate **310** is parallel to the principal face **213** of the first insulative substrate **210.** Radii of curvature of the first and second insulative substrates **210** and **310** are 600R to 1500R (600 mm to 1500 mm), for example; herein, radii of curvature of the first and second insulative substrates **210** and **310** are 1000R.

In the displaying region **211,** the signal lines **230** and the scanning lines **240** are disposed so that they cross each other perpendicularly. FIG. **1(c)** shows two signal lines **230** and two scanning lines **240** as an exemplification. Each circuit element **220** has a pixel electrode and a thin film transistor. Moreover, the signal line driving elements **260** and the scanning line driving elements **270** are mounted on the insulative substrate **210** via an anisotropic electrically-conductive layer (not shown). The anisotropic electrically-conductive layer is formed by using an anisotropic electrically-conductive film (ACF), anisotropic electrically-conductive paste (ACP), or the like.

The plurality of substrate lines **250** include: input substrate lines **252,** which are electrically connected to terminals **281** of the input substrate **280** and the signal line driving elements **260;** output substrate lines **254,** which are electrically connected to the signal lines **230** and the signal line driving elements **260;** input substrate lines **256,** which are electrically connected to the terminals **281** of the input substrate **280** and the scanning line driving elements **270;** and output substrate lines **258,** which are electrically connected to the scanning lines **240** and the scanning line driving elements **270.** In the following descriptions of the present specification, the input substrate lines **252** will be referred to as first input substrate lines; the output substrate lines **254** will be referred to as first output substrate lines; the input substrate lines **256** will be referred to as second input substrate lines; and the output substrate lines **258** will be referred to as second output substrate lines. Note that adjoining substrate lines **250** are disposed apart by a predetermined distance (e.g. about 31 µm), so as to electrically insulated from each other.

Note that, although the first input substrate lines **252** and the first output substrate lines **254** are provided for each signal line driving element **260,** FIG. **1(c)** only shows those corresponding to the signal line driving elements **260** that are provided at both ends of a row of signal line driving elements **260,** in order to prevent the figure from becoming too complicated. Similarly, although the terminals **281** of the input substrate **280** are provided so as to be electrically connected to the respective first input substrate lines for each signal line driving element **260,** FIG. **1(c)** only shows those corresponding to the signal line driving element **260** at the left end, in order to prevent the figure from becoming too complicated.

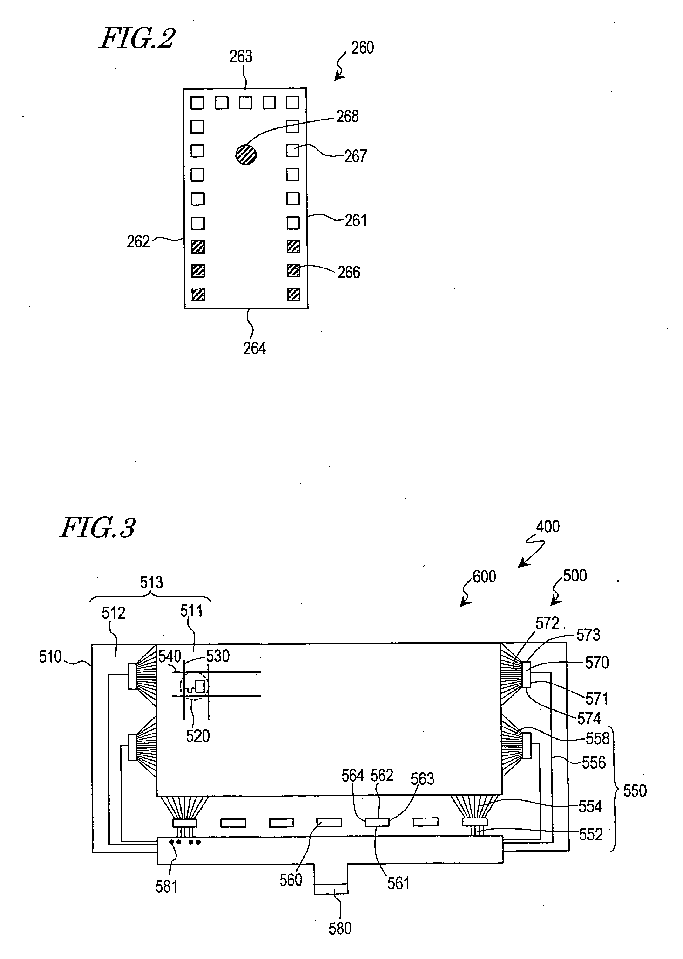

Hereinafter, the construction of the signal line driving elements **260** will be described. FIG. **2** shows a signal line driving element **260** as viewed from the normal direction of the principal face **213** of the first insulative substrate **210.** The signal line driving element **260** has a rectangular shape having two longer sides **261, 262** and two shorter sides **263, 264,** such that the ratio between the shorter sides **263, 264** and the longer sides **261, 262** is approximately 1:10, for example. Note that the scanning line driving elements **270** also have a similar construction to that of the signal line driving elements **260,** such that, when viewed from the normal direction of the principal face **213** of the first insulative substrate **210,** each scanning line driving element **270** has a rectangular shape having two longer sides **271, 272** and two shorter sides **273, 274.** Moreover, the ratio between the shorter sides **273, 274** and the longer sides **271, 272** is substantially similar to that of the signal line driving elements **260.** Note that, in strict manner, the ratio of the shorter sides and the longer sides may be different between the signal line driving elements **260** and the scanning line driving elements **270.**

Input bumps **266** and output bumps **267** shown in FIG. **2** are provided on a face of the signal line driving element **260** that opposes the principal face **213** of the first insulative substrate **210** (see FIG. **1(a)** and FIG. **1(c)****),** and an integrated circuit **268** shown in FIG. **2** is incorporated inside the signal line driving element **260.** Note that, as will be understood from FIG. **1(c)** and FIG. **2****,** the input bumps **266** are disposed on the input substrate side so as to be connected to the first input substrate lines **252** of the first insulative substrate **210,** whereas the output bumps **267** are disposed on the displaying region side so as to be connected to the first output substrate lines **254** of the first insulative substrate **210.** In the signal line driving element **260,** the number of output bumps **267** is greater than the number of input bumps **266.** While FIG. **2** schematically shows the input bumps **266** and output bumps **267** provided on the signal line driving element **260,** there may be 42 input bumps **266** and 480 output bumps **267,** for example. Moreover, the interval between adjoining output bumps **267** is 36 µm.

FIG. **1(c)** is referred to again. Input signals are input from the terminals **281** of the input substrate **280** to the signal line driving elements **260** and the scanning line driving elements **270,** respectively via the first input substrate lines **252** and the second input substrate lines **256** provided in the terminal region **212** of the first insulative substrate **210.** An integrated circuit (see FIG. **2****;** not shown in FIG. **1(c)**) is incorporated in each of the signal line driving elements **260** and the scanning line driving elements **270.** Each integrated circuit performs a predetermined process based on an input signal to generate a data signal and a gate signal, and they supply the data signals and the gate signals to the signal lines **230** and the scanning lines **240** respectively via the first output substrate lines **254** and the second output substrate lines **258.** FIG. **1(c)** shows a region **R1** that accommodates signal lines **230** to which a data signal is supplied from a single signal line driving element **260.** As shown in FIG. **1(c)****,** the signal line driving element **260** is disposed near the center of a shorter side of the region **R1.**

Hereinafter, the construction of the display device **100** of the present embodiment will be described in comparison with that of the display device **400** of a first comparative example. First, referring to FIG. **3****,** the construction of the display device **400** of the first comparative example will be described.

A first insulative substrate **510** and a second insulative substrate are curved also in the display device **400** of the first comparative example, as in the display device **100** of the present embodiment. However, the display device **400** of the first comparative example differs from the display device **100** of the present embodiment in that longer sides **561, 562** of each signal line driving element **560** are parallel to scanning lines **540.** In the following descriptions of the present specification, when a signal line driving element **560** is disposed so that the longer sides **561, 562** of the signal line driving element **560** are parallel to the scanning lines **540,** as in the display device **400** of the first comparative example, the signal line driving element may be referred to as being laterally positioned. On the other hand, as in the display device **100** of the present embodiment, when a signal line driving element **260** is disposed so that the longer sides **261, 262** of the signal line driving element **260** are perpendicular to the scanning lines **240** (i.e., parallel to the signal lines **230),** the signal line driving element may be referred to as being vertically positioned.

In the display device **400** of the first comparative example, the signal line driving elements **560** are laterally positioned on the first insulative substrate **510** which is curved in the lateral direction. Therefore, due to a bending stress, a load acts along the longer sides **561, 562** of the signal line driving elements **560** so as to detach it from the first insulative substrate **510.** In particular, a strong load acts on those signal line driving elements **560** which are at both ends of the row of signal line driving elements **560.** If the signal line driving elements **560** are detached from a principal face **513** of the first insulative substrate **510,** the connections between the signal line driving elements **560** and input substrate lines **552** and output substrate lines **554** will become insufficient.

On the other hand, in the display device **100** of the present embodiment, as shown in FIG. **1(b)** and FIG. **1(c)****,** the signal line driving elements **260** are vertically positioned on the first insulative substrate **210** which is curved in the lateral direction. In this case, even if the first insulative substrate **210** is curved, the signal line driving elements **260** are unlikely to be detached from the first insulative substrate **210,** and the electrical connection of the signal line driving elements **260** is ensured.

Thus, in the display device **100** of the present embodiment, since the signal line driving elements **260** are vertically positioned, the electrical connection of the signal line driving elements **260** is ensured even if the first insulative substrate **210** is curved in the lateral direction. Moreover, in the display device **100** of the present embodiment, the longer sides **271, 272** of the scanning line driving elements **270** are also disposed parallel to the longer sides **261, 262** of the signal line driving elements **260,** and thus the electrical connection of the scanning line driving elements **270** is ensured for a reason similar to that for the signal line driving elements **260.**

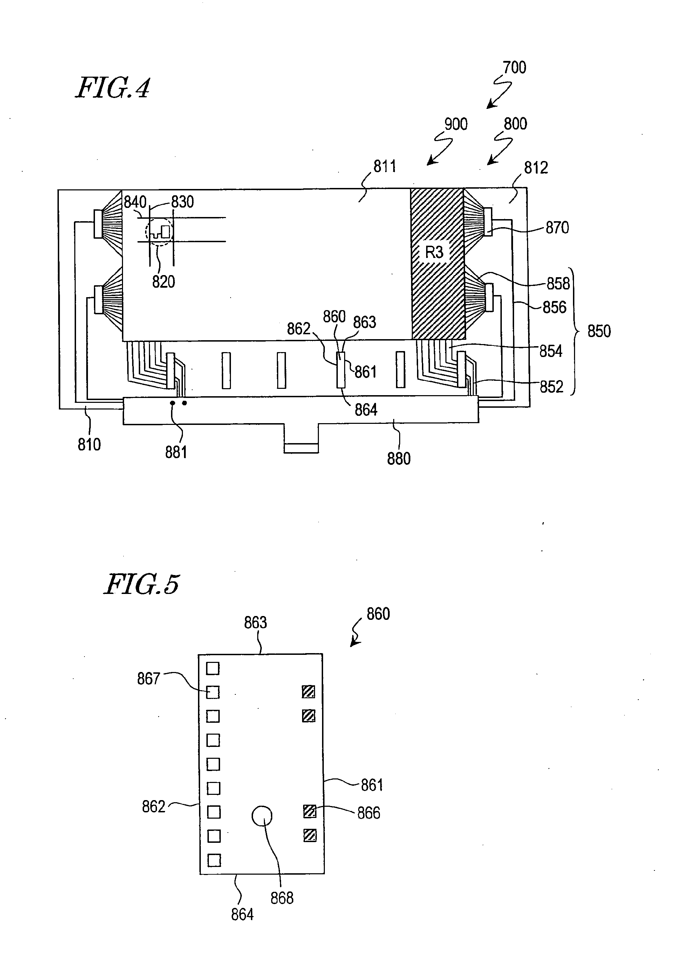

Next, the construction of the display device **100** of the present embodiment will be described in comparison with the display device **700** of the second comparative example. First, with reference to FIG. **4** and FIG. **5****,** the construction of the display device **700** of the second comparative example will be described. As shown in FIG. **4****,** in the display device **700** of the second comparative example, signal line driving elements **860** are vertically positioned in a manner similar to the display device **100** of the present embodiment. However, the display device **700** of the second comparative example differs from the display device **100** of the present embodiment in that, as the signal line driving elements **860,** those which are similar to what is commonly used in the case where the signal line driving elements are laterally positioned are used.

FIG. **5** shows the construction of a signal line driving element **860** in the display device **700** of the second comparative example. Similarly to what is commonly used in the case where the signal line driving elements are laterally positioned, the signal line driving element **860** has input bumps **866** along one longer side **861** and output bumps **867** along the other longer side **862.**

As shown in FIG. **4****,** the signal line driving elements **860** are vertically positioned in the display device **700** of the second comparative example, and substrate lines **850** are provided on a first insulative substrate **810** so as to conform to the signal line driving elements **860.** Specifically, input substrate lines **852** are provided so as to extend from terminals **881** of the input substrate **880** toward the longer side **861** of each signal line driving element **860,** whereas output substrate lines **854** are provided so as to extend from the longer side **862** of each signal line driving elements **860** toward signal lines **830.** Since the input substrate lines **852** and the output substrate lines **854** are provided in this manner in the display device **700** of the second comparative example, those input substrate lines **852** which are provided closer to the displaying region along the longer side **861** of each signal line driving element **860** and those output substrate lines **854** which are provided closer to the input substrate along the longer side **862** of each signal line driving element **860** become long. Thus, positioning of the input substrate lines **852** and the output substrate lines **854** requires a complicated designing, which requires a broad region for forming the output substrate lines **854,** thus resulting in an enlarged size of the insulative substrate **810.** On the other hand, in the display device **100** of the present embodiment, as shown in FIG. **1(c)****,** the first input substrate lines **252** are provided on the input substrate side, and the first output substrate lines **254** are provided on the displaying region side, whereby the first input substrate lines **252** and the first output substrate lines **254** become short. As a result, it is easy to design the positioning of the first input substrate lines **252** and the first output substrate lines **254,** thus making it possible to form the first output substrate lines **254** in a narrow region, whereby an increase in size of the first insulative substrate **210** is reduced.

To be more specific, in the display device **700** of the second comparative example, the plurality of input substrate lines **852** and output substrate lines **854** both have parallel portions which extend in parallel to the longer sides **861, 862** of the signal line driving elements **860.** Looking at these parallel portions, the parallel portions are arranged so as to flank one by one along the lateral width of the insulative substrate **810,** so that the input substrate lines **852** and output substrate lines **854** to be connected to one signal line driving element **860** cannot be formed within a narrow region. On the other hand, in the display device **100** of the present embodiment, although the first input substrate lines **252** and second output substrate lines **254** both have parallel portions which extend in parallel to the longer sides **261, 262** of the signal line driving elements **260,** the parallel portions of the first input substrate lines **252** are disposed closer to the input substrate than are the parallel portions of the second output substrate lines **254,** in a coinciding arrangement with them with respect to the lateral width of the first insulative substrate **210.** As a result, the input substrate lines **252** and output substrate lines **254** to be connected to one signal line driving elements **260** can be formed within a narrow region.

Moreover, in the display device **700** of the second comparative example, as shown in FIG. **4****,** each signal line driving element **860** is disposed at an edge of a shorter side of a region **R3** where the signal lines **830** to which a data signal is supplied by this signal line driving element **860** are provided. In this case, the output substrate lines **854** reaching the respective signal lines **830** from the signal line driving element **860** become long, thus resulting in signal delays. Moreover, since there are large differences in length among the output substrate lines **854** reaching the respective signal lines **830** from the signal line driving element **860,** a deterioration in display quality may occur due to signal delays. On the other hand, in the display device **100** of the present embodiment, the first output substrate lines **254** reaching the respective signal lines **230** from the signal line driving element **260** can be shortened, thus suppressing signal delays. Moreover, as shown in FIG. **1(c)****,** in the display device **100** of the present embodiment, each signal line driving element **260** is disposed near the center of a shorter side of the region **R1,** such that the first input substrate lines **252** and the first output substrate lines **254** are disposed axisymmetrically with respect to the signal line driving element **260.** As a result, the differences in length among the first output substrate lines **254** reaching the respective signal lines **230** from the signal line driving element **260** can be reduced, thus suppressing the deterioration in display quality.

Thus, in accordance with the display device **100** of the present embodiment, it is easier to design the positioning of the substrate lines **250,** and it is possible to form the first output substrate lines **252** within a narrow region.

Moreover, since the display device **100** of the present embodiment has a curved shape, it is possible to support reflection glare as mentioned above. Moreover, the display device **100** of the present embodiment has the following advantages in addition to suppression of reflection glare.

Since the display device has a curved shape, the display device has an improved design freedom, thus further broadening the range of applications for the display device. For example, the display device **100** is suitably used as a display device for an instrument panel to be incorporated in an automotive vehicle. As used herein, an "automotive vehicle" broadly refers to any vehicle or machine which is capable of self propulsion and used for passenger or article transportation or moving of objects, without being limited to so-called automobiles. When a display device is used in an automotive vehicle, generally speaking, there is a tendency that the driving elements are likely to be detached from the insulative substrate due to vibrations and the like. However, in the display device **100** of the present embodiment, the signal lines and the scanning line driving elements **260, 270** are disposed in a manner not likely to be detached from the first insulative substrate **210,** so that the display device **100** is suitably used for automotive vehicles.

Specifically, an instrument panel of an automobile may carry various instruments such as a speedometer. In the place of such instruments, a display device having a curved shape can be used. In recent years, there is a tendency that automobiles having a curvy structure are preferred. By using a curved liquid crystal display device as an instrument panel, it becomes possible to produce an automobile which satisfies the preferences of users.

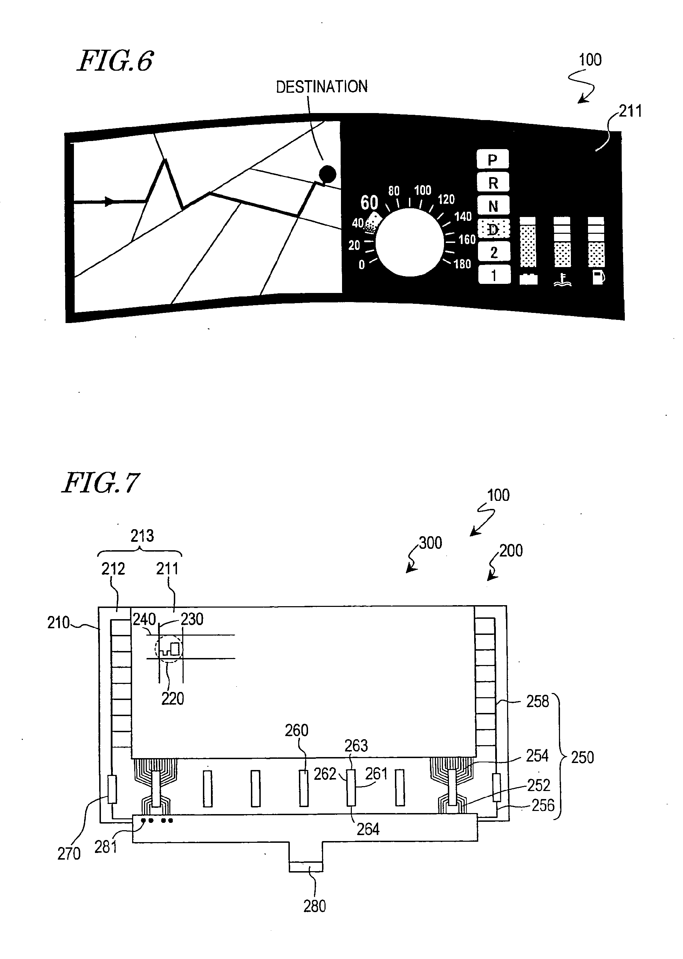

FIG. **6** shows an example where the display device **100** of the present embodiment is used for an instrument panel of a four-wheeled automobile. FIG. **6** shows an example where the velocity, shift lever position, remaining battery power, water temperature, and remaining fuel amount of the automotive vehicle are displayed on the right-hand side of a displaying region **211,** whereas car navigation information is displayed on the left-hand side of the displaying region **211.** The car navigation information is information of a current location or a route to a destination for a driver during travel.

In addition to improvements in design freedom, since the display device **100** has a curved shape, differences in distances from the viewer to the central portion and peripheral portions on the display surface can be reduced, whereby an enhanced display realism is provided.

A curved insulative substrate can be produced by known methods as described below. For example, an insulative substrate may be sandwiched by acrylic plates having a curved-surface shape, and a pressure may be applied so as to compress the two acrylic substrates, whereby a curved insulative substrate can be produced. Alternatively, an insulative substrate may be secured to an acrylic plate having a curved-surface shape, whereby a curved insulative substrate can be produced.

Alternatively, the insulative substrate may be curved by press forming. Specifically, after overlaying a second insulative substrate on a first insulative substrate, at a high temperature, they may be pressed with a concave shaping die and a convex shaping die having a predetermined radius of curvature, thus performing a press forming. Alternatively, after overlaying a second insulative substrate on a first insulative substrate, a self-weight forming may be performed at a high temperature, followed by a press forming.

Alternatively, the insulative substrate may be curved by holding a flexible insulative substrate in a curved manner. Specifically, a retention member having a curved face may be kept in close contact with an insulative substrate, thus holding the insulative substrate in a curved manner. Alternatively, a slit in the form of a curved surface which is curved in a convex manner may be formed so as to penetrate a retention member of a rectangular solid shape, and an insulative substrate may be inserted into the slit so as to allow the insulative substrate to be curved.

Moreover, the display device may have a mechanism for curving the insulative substrate in a variable manner. Specifically, coupling members for holding the display device so as to be capable of pivoting may be provided at both sides along the longitudinal direction of the display device; these coupling members may be attached to nuts which move along a screw shaft; and by rotating the screw shaft with a motor, the curved shape may be changed in a variable manner.

Alternatively, two insulative substrates with respectively different coefficients of thermal expansion may be used, and the respective insulative substrates may be allowed to be curved. Specifically, when substrates whose coefficients of thermal expansion differ in at least one direction are allowed to adhere at a temperature which is higher than the temperature of use, a bending stress occurs in the two insulative substrates at room temperature, whereby the substrates may be allowed to be curved.

Note that the first insulative substrate 210 may be curved after mounting the signal line driving elements 260 and scanning line driving elements **270** on the first insulative substrate **210** having a planar shape, or, the signal line driving elements **260** and scanning line driving elements **270** may be mounted after curving the first insulative substrate **210.** However, mounting can be performed more easily by curving the first insulative substrate **210** after mounting the signal line driving elements **260** and scanning line driving elements **270.** Thus, a curved insulative substrate can be produced by various methods.

In the above description, an instrument panel of an automotive vehicle is illustrated as an application of a display device having a curved shape; however, the present invention is not limited thereto. For example, a circuit for receiving a television broadcast may be provided for a display device having a curved shape, and this display device may be utilized in a large-size television set. In this case, too, the viewer will feel surrounded by the concave-shaped display surface, thus being able to view a realistic video.

In the display device **100** shown in FIG. **1(c)****,** the longer side **272** of each scanning line driving element **270** opposes the displaying region **211;** however, the present invention is not limited thereto. As shown in FIG. **7****,** the scanning line driving elements **270** may be disposed in the same row as the signal line driving elements **260.** As a result, the lateral width of the first insulative substrate **210,** i.e., the lateral width of the active matrix substrate **200** can be reduced.

In the above description, the signal line driving elements **260** and the scanning line driving elements **270** are mounted on the first insulative substrate **210** via an anisotropic electrically-conductive layer; however, the present invention is not limited thereto. The signal line driving elements **260** and the scanning line driving elements **270** may be mounted via solder.

In the above description, the first and second insulative substrates **210** and **310** are glass substrates; however, the present invention is not limited thereto. As the first and second insulative substrates **210** and **310,** transparent substrates other than glass substrates (e.g., plastic film substrates or resin substrates) may be used. Specifically, the first and second insulative substrates **210** and **310** may be produced by using polyethylene terephthalate (PET), polycarbonate (PC), polyethersulfone (PES), polyetherketone (PEEK), polyethylene naphthalate (PEN), polyimide (PI), or the like.

In the display device **100** shown in FIG. **1(c)****,** the plurality of signal line driving elements (first driving elements) **260** and scanning line driving elements (second driving elements) **270** are mounted on the first insulative substrate **210;** however, the present invention is not limited thereto. There may be one signal line driving element (first driving element) **260** and one scanning line driving element (second driving element) **270.**

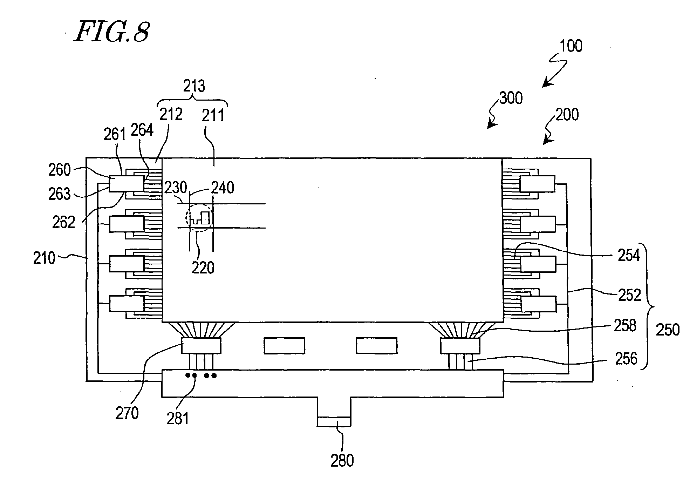

In the above description, the first driving elements each having a longer side extending in parallel to the first lines are signal line driving elements; however, the present invention is not limited thereto. The first driving elements may be scanning line driving elements. In this case, as shown in FIG. **8****,** the first lines **230** are scanning lines; the second lines **240** are signal lines; the first driving elements **260** are scanning line driving elements; and the second driving elements **270** are signal line driving elements. As shown in FIG. **8****,** the scanning line driving elements **260** may be laterally positioned so that the longer sides **261, 262** of each scanning line driving element **260** are parallel to the direction in which the scanning lines **230** extend, thus allowing the first insulative substrate **210** and the second insulative substrate **310** to be curved along the vertical direction. Thus, both of the scanning line driving elements **260** and the signal line driving elements **270** are unlikely to be detached from the first insulative substrate **210,** whereby the electrical connection of the scanning line driving elements **260** and the signal line driving elements **270** is ensured. Moreover, the first output substrate lines **254** being connected to the scanning line driving elements **260** are provided closer to the displaying region than are the first input substrate lines **252.** As a result, the first input substrate lines **252** and first output substrate lines **254** connected to one scanning line driving elements **260** can be formed within a narrow region.

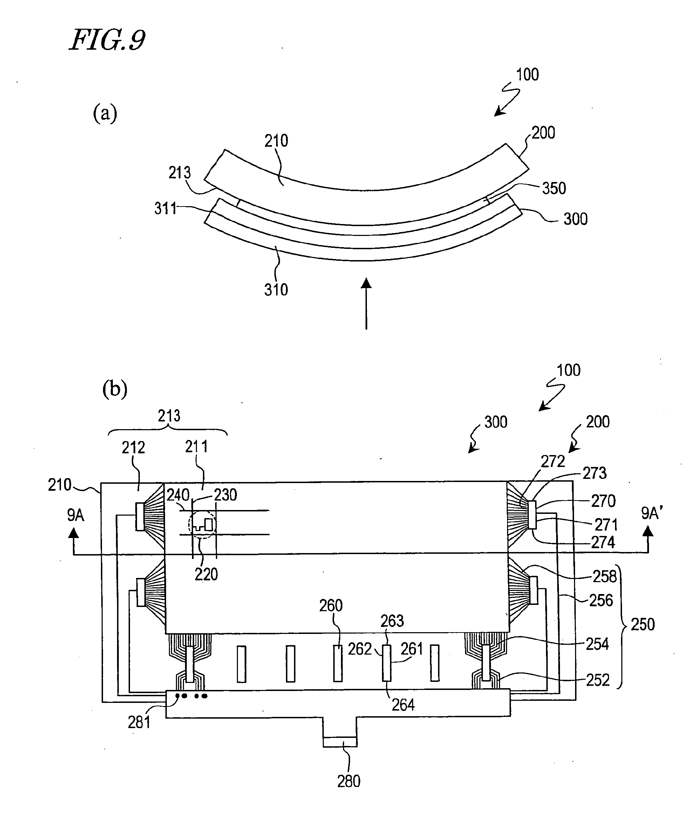

In the above description, the display surface is curved in a concave shape toward the viewer; however, the present invention is not limited thereto. As shown in FIG. **9(a)****,** the display surface may be curved in a convex shape toward the viewer. In this case, as shown in FIG. **9(a)****,** the principal face **213** of the first insulative substrate **210** is curved in a convex shape; the principal face **311** of the first insulative substrate **310** is curved in a concave shape; and as shown in FIG. **9(b)****,** the signal line driving elements **270** are vertically positioned. Note that FIG. **9(a)** corresponds to a cross section along line **9A-9A'** in FIG. **9(b)****.**

In the above description, the display device is a liquid crystal display device; however, the present invention is not limited thereto. The display device may be any arbitrary display device, such as an organic EL display device, a plasma display device, or an SED display device. In the case where the display device is an organic EL display device, the display device does not need to include a counter substrate, but a display medium layer (i.e., an organic EL layer) may be disposed on a principal face of an active matrix substrate.

### INDUSTRIAL APPLICABILITY

According to the present invention, there is provided a display device in which detachment of driving elements from a curved insulative substrate is suppressed, and in which an increase in size of the insulative substrate is reduced. Moreover, according to the present invention, a display device which is suitably used for an instrument panel can be provided. This instrument panel is suitably used for various types of automotive vehicles, e.g., a car, a motorbike, a bus, a truck, a tractor, an airplane, a motor boat, a vehicle for civil engineering use, a train, or the like. Moreover, according to the present invention, a display device which is capable of displaying a realistic video can be provided.

## Claims

1. A display device comprising an active matrix substrate and a display medium layer disposed on a principal face of the active matrix substrate, wherein,
the active matrix substrate includes:
an insulative substrate having a principal face which includes a displaying region and a terminal region,
a plurality of circuit elements provided in the displaying region of the insulative substrate,
a plurality of first lines and a plurality of second lines connected to the plurality of circuit elements,
a plurality of substrate lines provided in the terminal region of the insulative substrate,
at least one first driving element mounted in the terminal region of the insulative substrate for supplying a signal to the plurality of first lines, and
at least one second driving element mounted in the terminal region of the insulative substrate for supplying a signal to the plurality of second lines;
the insulative substrate is curved;
the plurality of substrate lines include a plurality of first input substrate lines which are electrically connected to the at least one first driving element and a plurality of first output substrate lines which are electrically connected to the plurality of first lines and the at least one first driving element, the first output substrate lines corresponding to the at least one first driving element being disposed so as to be closer to the displaying region than are the first input substrate lines; and
when the at least one first driving element is viewed from a normal direction of the principal face of the insulative substrate, the at least one first driving element has a rectangular shape with two longer sides and two shorter sides, the at least one first driving element being mounted so that each longer side thereof is parallel to a direction in which the first lines extend.

2. The display device of claim 1, wherein input bumps electrically connected to the first input substrate lines and output bumps electrically connected to the first output substrate lines are provided on the at least one first driving element.

3. The display device of claim 1 or 2, wherein, when the at least one second driving element is viewed from the normal direction of the principal face of the insulative substrate, the at least one second driving element has a rectangular shape with two longer sides and two shorter sides, the longer sides of the at least one second driving element being disposed parallel to the longer sides of the at least one first driving element.

4. The display device of any of claims 1 to 3, wherein the insulative substrate is curved in a direction which is perpendicular to each longer side of the at least one first driving element.

5. The display device of any of claims 1 to 4, wherein the principal face of the insulative substrate is curved in a concave shape.

6. The display device of any of claims 1 to 4, wherein the principal face of the insulative substrate is curved in a convex shape.

7. The display device of any of claims 1 to 6, wherein each first line is one of a signal line and a scanning line, and each second line is the other of a signal line and a scanning line.

8. The display device of any of claims 1 to 7, wherein the insulative substrate is a glass substrate.

9. The display device of any of claims 1 to 7, wherein the insulative substrate is a plastic substrate.

10. The display device of any of claims 1 to 9, wherein the at least one first driving element and the at least one second driving element are each mounted via an anisotropic electrically-conductive layer.

11. The display device of any of claims 1 to 10, further comprising a counter substrate opposing the active matrix substrate via the display medium layer, wherein,
the display medium layer is a liquid crystal layer.

12. The display device of any of claims 1 to 11, further comprising a circuit for receiving a television broadcast.

13. An automotive vehicle wherein the display device of any of claims 1 to 12 is used as an instrument panel.
